(19) Europäisches Patentamt
European Patent Office
Office européen des brevets

(11) **EP 2 678 270 B1**

(12) **EUROPÄISCHE PATENTSCHRIFT**

(45) Veröffentlichungstag und Bekanntmachung des Hinweises auf die Patenterteilung:
**26.11.2014   Patentblatt 2014/48**

(51) Int Cl.:
*C01B 21/26* (2006.01)      *C01B 21/38* (2006.01)
*B01D 53/86* (2006.01)

(21) Anmeldenummer: **12706771.8**

(22) Anmeldetag: **14.02.2012**

(86) Internationale Anmeldenummer:
**PCT/EP2012/000642**

(87) Internationale Veröffentlichungsnummer:
**WO 2012/113516 (30.08.2012 Gazette 2012/35)**

(54) **VERFAHREN ZUR BESEITIGUNG VON N2O UND NOX AUS DEM PROZESS ZUR SALPETERSÄUREHERSTELLUNG UND DAFÜR GEEIGNETE ANLAGE**

METHOD FOR REMOVING N2O AND NOX FROM THE NITRIC ACID PRODUCTION PROCESS, AND AN INSTALLATION SUITABLE FOR SAME

PROCÉDÉ POUR ÉLIMINER LE N2O ET LES NOX DU PROCÉDÉ POUR LA PRÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2011   DE 102011011881**

(43) Veröffentlichungstag der Anmeldung:
**01.01.2014   Patentblatt 2014/01**

(73) Patentinhaber: **ThyssenKrupp Uhde GmbH**
**44141 Dortmund (DE)**

(72) Erfinder:
• SCHWEFER, Meinhard
  **59872 Meschede (DE)**
• SIEFERT, Rolf
  **33378 Rheda-Wiedenbrück (DE)**
• FUCHS, Jürgen
  **44139 Dortmund (DE)**
• RUTHARDT, Klaus
  **44265 Dortmund (DE)**
• GROVES, Michael
  **58285 Gevelsberg (DE)**

(74) Vertreter: **Wolff, Felix et al**
**Kutzenberger Wolff & Partner**
**Theodor-Heuss-Ring 23**
**50668 Köln (DE)**

(56) Entgegenhaltungen:
**EP-A1- 1 918 016      WO-A1-01/51182**
**WO-A1-01/51415**

• **PEREZ-RAMIREZ JAVIER ET AL: "Ex-framework FeZSM-5 for control of N2O in tail-gases", CATALYSIS TODAY, AMSTERDAM, NL, Bd. 76, 1. Januar 2002 (2002-01-01), Seiten 55-74, XP002964929, DOI: 10.1016/S0920-5861(02) 00208-0**

**Beschreibung**

Die Erfindung betrifft ein Verfahren zur Beseitigung von $N_2O$ und $NO_X$ aus dem Prozess zur Salpetersäureherstellung, sowie eine geeignete Anlage zur Durchführung dieses Verfahrens.

Die Herstellung von Salpetersäure erfolgt im industriellen Maßstab im allgemeinen nach dem Ostwald-Verfahren durch katalytische Oxidation von Ammoniak ($NH_3$) an Pt/Rh-Katalysatoren. Dabei wird $NH_3$ selektiv zu Stickstoffmonoxid (NO) oxidiert, welches dann im Laufe des weiteren Prozesses zu Stickstoffdioxid ($NO_2$) oxidiert wird und schließlich mit Wasser in einem Absorptionsturm zu Salpetersäure umgesetzt wird. Die Pt/Rh-Katalysatoren sind als dünne Netze ausgebildet und in einem Brenner auf breiter Fläche aufgespannt. Die Netze werden von einem Gasgemisch aus typischerweise etwa 8-12 Vol% Ammoniak und Luft durchströmt, wobei sich an den Netzen durch die Exothermie der Reaktion eine Temperatur von etwa 850-950°C einstellt.

Eine Übersicht über den Ablauf der Salpetersäureproduktion und deren verschiedene Verfahrensvarianten ist bspw. in Ullmanns Encyclopedia of Industrial Chemistry, Vol.A 17, VCH Weinheim (1991) oder auch in Winnacker-Küchler, Chemische Technik, Prozesse und Produkte, 5. Auflage, Band 3, Anorganische Grundstoffe, Zwischenprodukte, Chemische Technik, Dittmeyer, R. / Keim, W. / Kreysa, G. / Oberholz, A. (Hrsg.), Wiley-VCH, Weinheim, (2005) gegeben.

Leider aber ist die Oxidation des $NH_3$ zu NO nicht 100% selektiv, sondern es entsteht neben dem gewünschten NO immer auch ein gewisser Anteil an Stickstoff ($N_2$) und Lachgas ($N_2O$).

Je nach Oxidationsbedingungen, d.h. herrschendem Druck, Temperatur und Anströmgeschwindigkeit der $NH_3$-Verbrennung sowie Art und Alterungszustand der Pt/Rh-Netzkatalysatoren werden typischerweise ca. 4 bis 15 kg $N_2O$ pro Tonne $HNO_3$ gebildet. Es resultieren damit im Prozessgas typische $N_2O$-Konzentrationen von ca. 500 bis 2000 ppmv.

Das gebildete $N_2O$ wird beim Einleiten des Prozessgases in den Absorptionsturm nicht absorbiert und gelangt so in das Restgas der $HNO_3$-Produktion. Da auch die hier installierten DeNO$_X$-Stufen zur Reduzierung des Restgehaltes an NO und $NO_2$ (zusammen bezeichnet als $NO_X$) im allgemeinen keine Minderung des $N_2O$-Gehaltes bewirken, gelangt das $N_2O$ schließlich mehr oder weniger ungemindert in die Atmosphäre. Beispielsweise enthält das Restgas einer Salpetersäureanlage, in der die $NH_3$-Oxidation bei Mitteldruck (ca. 4 - 5 bar abs) durchgeführt wird, durchschnittlich ca. 1.000 ppmv $N_2O$, was einer $N_2O$-Konzentration im Prozessgas hinter der $NH_3$-Oxidation von ca. 830 ppmv entspricht.

Während NO und $NO_2$ seit langem als Verbindungen mit ökotoxischer Relevanz bekannt sind (saurer Regen, Smog-Bildung) und weltweit Grenzwerte für $NO_X$-Emissionen sowie technische Maßnahmen zu deren Reduzierung etabliert wurden, rückte Lachgas erst im letzten Jahrzehnt in den Blickpunkt des Umweltschutzes, da dieses in nicht unerheblichem Maße zum Abbau von stratosphärischem Ozon und zum Treibhauseffekt beiträgt. So wurden in letzten Jahren für den Salpetersäureprozess vielfältige Lösungen zur Entfernung von $N_2O$ zum Teil in Kombination mit neuen Verfahren zur $NO_X$-Reduktion entwickelt und in industriellen Anlagen zur Produktion von Salpetersäure zur Anwendung gebracht.

Eine Übersicht über verschiedene Maßnahmen zur $N_2O$- und $NO_X$-Reduktion im $HNO_3$-Prozess wird bspw. gegeben in: J. Perez-Ramirez et al. "Formation and control of N2O in nitric acid production - Where do we stand today?" Appl. Catal. B Environmental 2003, 44 (2), 117-151, in M. Schwefer, R. Maurer, M. Groves,"Reduction of Nitrous Oxide Emissions from Nitric Acid Plants" Nitrogen 2000 International Conference, Wien, Österreich, März 2000, oder in Integrated Pollution Prevention and Control Reference Document on Best Available Techniques for the Manufacture of Large Volume Inorganic Chemicals - Ammonia, Acids and Fertilisers, European Commission August 2007.

Zur reinen $N_2O$-Beseitigung werden dabei vielfach sogenannte Sekundärmaßnahmen eingesetzt, welche auf eine $N_2O$-Zersetzung im Prozessgas der $HNO_3$-Produktion abzielen. Dabei werden spezielle Katalysatoren direkt nach der $NH_3$-Verbrennung unterhalb der Pt/Rh-Netzkatalysatoren installiert. Das Prozessgas weist hier Temperaturen von ca. 900°C auf, so dass $N_2O$ hier nur einer geringen katalytischen Aktivierung zu seiner Zersetzung bedarf. Ziel einer Sekundärmaßnahme ist es dabei, möglichst hohe Abbaugrade an $N_2O$ zu erreichen. Typischerweise wird ein $N_2O$-Abbau >80 %, oftmals auch > 90 % erreicht. Bei einer für eine Mitteldruckanlage typischen, d. h. durchschnittlich gebildeten Menge von 830 ppmv $N_2O$ entspricht dies $N_2O$-Restkonzentrationen von <165 ppmv, insbesondere <80 ppmv im Prozessgas bzw. <200 ppmv, insbesondere <100 ppmv im Restgas der $HNO_3$-Produktion. Abbauraten von >95 % können mit dieser Technik aber nicht erreicht werden, da der zur Verfügung stehende Raum zur Aufnahme des Sekundärkatalysators unterhalb der Pt/Rh-Netzkatalysatoren begrenzt ist.

Die Sekundärmaßnahme bietet aber den Vorteil einer universellen Einsetzbarkeit, einer zumeist einfachen Installation und eines geringen Katalysatorbedarfs. Im Idealfall ist nur ein Austausch von Füllkörpern, die oftmals unterhalb der Netzpackungen zur Strömungsvergleichmäßigung angeordnet sind, gegen den Sekundärkatalysator notwendig, so dass keine zusätzlichen Apparatekosten entstehen. Dies ist insbesondere bei Nachrüstungen ein klarer Vorteil gegenüber einer $N_2O$-Beseitigung im Restgas der $HNO_3$-Produktion (sog. Tertiärmaßnahme).

Ein Nachteil der Sekundärmaßnahmen ist allerdings, dass aufgrund des begrenzten Raumes unterhalb der Katalysatornetze zur Erreichung hoher Abbauraten an $N_2O$ ein entsprechend feinteiliger Katalysator mit hoher geometrischer Oberfläche eingesetzt werden muss. Dies ist mit einem entsprechend hohem Druckverlust verbunden, welcher sich letztlich in einer verminderten Produktionsleistung der HNO₃-Anlage niederschlägt. Zudem besteht die Gefahr, dass ein nur ungenau zu beziffernder Produktverlust eintreten kann, da der Katalysator bei 900°C nicht nur N₂O, sondern in unbekanntem Ausmaß auch NO zersetzen kann.

Zur $NO_X$-Beseitigung im Restgas der HNO₃-Produktion werden in Salpetersäureanlagen üblicherweise klassische SCR-Katalysatoren auf $TiO_2/V_2O_5$-Basis eingesetzt (vgl. etwa G. Ertl, H. Knözinger J. Weitkamp: Handbook of Heterogeneous Catalysis, Vol. 4, Seiten 1633-1668, VCH Weinheim (1997)). Diese arbeiten in einem Temperaturbereich von etwa 150 bis 450°C und werden im technischen Maßstab bevorzugt zwischen 200 und 400°C, insbesondere zwischen 250 und 350°C betrieben. Bei entsprechender Dimensionierung der Katalysatorbetten kann so ein $NO_X$-Abbau bis auf Restkonzentrationen von 40 ppm $NO_X$ in Sonderfällen auf bis zu 20 ppm $NO_X$ erreicht werden. In vielen Salpetersäureanlagen werden derartige SCR-Katalysatoren im Restgas in Kombination mit einer Sekundärmaßnahme, d.h. mit einer N₂O-Beseitigung im Prozessgas betrieben.

In Hinblick auf die $NO_X$-Beseitigung im Restgas der HNO₃-Produktion erscheinen außerdem mit Eisen beladene Zeolith-Katalysatoren besonders vorteilhaft, da mit diesen im Unterschied zu klassischen $DeNO_X$-Katalysatoren auf $TiO_2/V_2O_5$-Basis je nach Temperatur auch gleichzeitig ein gewisser Anteil an N₂O beseitigt werden kann. Dies ist bspw. bekannt aus den Offenlegungen in DE 101 12 444 A1 und in DE 102 15 605 A. In DE 101 12 444 A1 wird ein N₂O und $NO_X$ enthaltendes Gas zunächst mit einem gasförmigen Reduktionsmittel für $NO_X$, vorzugsweise mit NH₃, gemischt und anschließend zum gleichzeitigen Abbau von N₂O (durch Zersetzung) und $NO_X$ (durch Reduktion) bei einer Temperatur von weniger als 450°C mit einer auszuwählenden Raumgeschwindigkeit über den Katalysator geleitet. In DE 102 15 605 A wird das N₂O und $NO_X$ enthaltende Gas zunächst mit Ammoniak als Reduktionsmittel für $NO_X$ und zusätzlich mit Kohlenwasserstoffen bzw. Kohlenmonoxid und/oder Wasserstoff als Reduktionsmittel für N₂O gemischt und anschließend zum Abbau von N₂O und $NO_X$ jeweils durch Reduktion bei einer Temperatur von weniger als 450°C über mit Eisenbeladene Zeolithe geleitet. Voraussetzung für die wirksame Reduktion des N₂O in diesem Verfahren ist eine vollständige $NO_X$-Reduktion. Die Beseitigung von N₂O im Restgas der HNO₃-Produktion wird als Tertiärmaßnahme bezeichnet.

WO 01/51415 A1 offenbart ein Verfahren zur Beseitigung von Lachgas bei der Salpetersäureproduktion.

Aus WO 01/51182 A1 sind ein Verfahren und eine Vorrichtung zur Beseitigung von $NO_X$ und N₂O aus dem Restgas der Salpetersäureproduktion bekannt.

EP 1 918 016 A1 offenbart den Einsatz eines mit Eisen beladenen Zeolith-Katalysators vom FER-Typ für die Zersetzung von N₂O sowie die kombinierte Entfernung von N₂O und $NO_x$ aus Abgasen.

J. Pérez-Ramírez et al. beschreiben in Catalysis Today 76 (2002) 55-74 einen mit Eisen beladenen Zeolithen des Typs ZSM-5, der sich für die Zersetzung von N₂O in Restgasen von Salpetersäureanlagen eignet.

Aus dem Stand der Technik waren dem Fachmann also verschiedene Möglichkeiten zur Vermeidung von N₂O- und $NO_X$-Emissionen bei Salpetersäureanlagen bekannt. Dabei gelten die oberhalb erwähnten Sekundär- und Tertiärmaßnahmen zur N₂O-Beseitigung als konkurrierende Technologien. Eine Kombination dieser Maßnahmen zur N₂O-Beseitigung wurde aus Kostengründen im technischen Maßstab bislang nicht realisiert. In "Remarks and Comments on Nitric Acid Production Project Protocol - Public Draft Version 1.0 October 2009 (erhältlich über http://www.climateactionreserve-.org/wpcontent/uploads/2009/06/NAP_Public_Comment_-_Uhde_GmbH.pdf) von Groves und Rieck, findet sich lediglich die Erwähnung, dass ein Sekundärmaßnahme mit schlechter Abbauleistung durch eine Tertiärmaßnahme unterstützt werden könnte, um dann eine insgesamt hohe N₂O-Abbaurate zu erreichen. Dabei ist nicht erwähnt, wie die Kopplung dieser Maßnahmen ausgestaltet sein sollte, bspw. ob es sich bei der Tertiärmaßnahme um eine katalytische Zersetzung oder Reduktion von N₂O handelt oder ob der Abbau von N₂O mit einer $DeNO_X$-Stufe gekoppelt werden könnte oder welche Vorrichtungen oder Apparate vorteilhafterweise verwendet werden könnten.

Mit der vorliegenden Erfindung sollen nun erstmals die Verfahrensschritte einerseits zur katalytischen N₂O-Beseitigung im Prozessgas und andererseits zur N₂O- und $NO_X$-Beseitigung im Restgas unter Verwendung von mit Eisen beladenen Zeolith-Katalysatoren miteinander kombiniert werden. Da die mit Eisen beladenen Zeolith-Katalysatoren, wie oben erwähnt, auch eine katalytische Aktivität zur N₂O-Zersetzung oder auch N₂O-Reduktion aufweisen, könnte parallel zur $NO_X$-Reduktion auch ein weiterer N₂O-Abbau realisiert werden. Da für den N₂O-Abbau im Prozessgas bei hohen Temperaturen (850-950°C) generell weitaus weniger Katalysator benötigt wird als zum N₂O-Abbau im Restgas bei niedrigen Temperaturen (T = < 500°C) erscheint es aus technischer und wirtschaftlicher Sicht zunächst vorteilhaft, eine möglichst hohe Abbaurate an N₂O durch Sekundärmaßnahmen zu realisieren und die mit Eisen beladenen Zeolith-Katalysatoren im Restgas mehr oder weniger ausschließlich zur $NO_X$-Reduktion zu verwenden. Bekanntermaßen erfordert die katalytische $NO_X$-Reduktion im Vergleich zum katalytischen N₂O-Abbau ein wesentlich geringeres Katalysatorvolumen. Der Fachmann hätte also - ausgehend von den Anregungen im Stand der Technik - das N₂O weitestgehend im Prozessgas nach der Ammoniakoxidation und vor der Einleitung in den Absorptionsturm abgebaut und das erhaltene Restgas, welches dann in Bezug auf die Stickoxide vorwiegend $NO_X$ aufgewiesen hätte, in einer dem Absorptionsturm nachgeschalteten $DeNO_X$-Stufe auf Basis von Fe-Zeolith-Katalysatoren durch selektive katalytische Reduktion mit Ammoniak möglichst weitgehend vom $NO_x$ befreit.

Bei der Umsetzung dieser Idee wurde nun aber überraschend festgestellt, dass die Abbauleistung der DeN-

$O_x$-Stufe durch die zusätzliche Installation einer Sekundärmaßnahme erheblich gemindert wurde. Überraschenderweise wurde gefunden, dass bei sehr niedrigem Gehalt an $N_2O$, d.h. wenn ein sehr hoher $N_2O$-Abbau durch die Sekundärmaßnahme realisiert wird, bei der $NO_x$-Reduktion mit $NH_3$ in der dem Absorptionsturm nachgeschalteten $DeNO_x$-Stufe mit zunehmendem $NO_x$-Reduktionsgrad auf Werte < 40 bis < 3 ppmv in Abhängigkeit von der gewählten Katalysatorbelastung d.h. Raumgeschwindigkeit ein Ammoniakschlupf im resultierenden Abgasstrom auftritt. Da $NH_3$ eine sehr (öko-)toxische Verbindung ist, ist dies ein extrem unerwünschter Effekt. Für $NH_3$-Emissionen bzw. für den $NH_3$-Schlupf aus $DeNO_x$-Anlagen sind in vielen Ländern strikte Grenzwerte gesetzt. Zudem kann ein $NH_3$-Schlupf in Gegenwart vom restlichen $NO_x$ zur Bildung von Ammoniumnitrat führen, welches sich in kühleren Anlagenteilen ablagern kann. Dies ist unter Sicherheits-aspekten in jedem Fall zu vermeiden, da Ammoniumnitrat eine explosive Substanz ist.

Aufgabe der vorliegenden Erfindung ist es somit, ein Verfahren und eine dafür geeignete Anlage zur Verfügung zu stellen, die bei der Kombination eines Sekundärkatalysators im Prozessgasstrom mit einer mit Eisen beladenen Zeolith-Katalysator enthaltenden Entstickungsstufe im Restgasstrom sowohl einen hohen Abbau von $NO_x$ und als auch von $N_2O$ gewährleistet, ohne dass es zu einem Ammoniakschlupf im resultierenden Abgasstrom kommt.

Der Druckverlust welcher durch beide Katalysatorstufen erzeugt wird, soll dabei zu keiner signifikanten Beeinträchtigung des möglichen Durchsatzes der $HNO_3$-Produktion bzw. zu Beeinträchtigung der Wirtschaftlichkeit des Verfahrens führen.

Die Aufgabe wird gelöst durch ein Verfahren zur Herstellung von Salpetersäure durch katalytische Oxidation von $NH_3$ mit Sauerstoff und anschließende Umsetzung des gebildeten $NO_x$ mit einem Absorptionsmittel, vorzugsweise mit Wasser, in einem Absorptionsturm umfassend ein Katalysatorbett zur $N_2O$-Zersetzung, welches im Prozessgas, d.h. in Strömungsrichtung nach der katalytischen $NH_3$-Oxidation und vor dem Absorptionsturm angeordnet ist und ein Katalysatorbett zur $NO_x$-Reduktion und weiteren $N_2O$-Minderung, welches im Restgas, d. h. in Strömungsrichtung nach dem Absorptionsturm angeordnet ist,

- wobei in dem im Prozessgas angeordneten Katalysatorbett zur $N_2O$-Zersetzung maximal soviel $N_2O$-Abbau abgebaut wird, dass vor Eintritt des Restgases in das Katalysatorbett zur $NO_x$-Reduktion der $N_2O$-Gehalt > 100 ppmv, bevorzugt > 200 ppmv, besonders bevor-zugt > 300 ppmv, und ganz besonders bevorzugt > 300 bis 1000 ppmv, beträgt und ein molares $N_2O/NO_x$-Verhältnis von > 0,25, vorzugsweise > 0,5, resultiert, und
- wobei das im Restgas angeordnete Katalysatorbett zur $NO_x$-Reduktion und weiteren $N_2O$-Minderung mindestens einen mit Eisen beladenen Zeolith-Katalysator enthält, und
- wobei dem Restgas vor Eintritt in das Katalysatorbett eine solche Menge an $NH_3$ zugesetzt wird, dass am Austritt des Katalysatorbettes eine $NO_x$-Konzentration von < 40ppmv, bevorzugt <20 ppmv, besonders bevorzugt <10 ppmv, ganz besonders bevorzugt <5 ppmv, insbesondere <3 ppmv oder äußerst bevorzugt <3 bis 0 ppmv resultiert, und
- wobei die Betriebsparameter derart gewählt werden, dass eine $N_2O$-Konzentration von <200 ppmv, bevorzugt <100 ppmv, besonders bevorzugt <50 ppmv, ganz besonders bevorzugt <30 ppmv und äußerst bevorzugt <30 bis 0 ppmv resultiert.

Der o.g. erfindungsgemäße $N_2O$-Abbau im Katalysatorbett des Prozessgases auf resultierende Restkonzentrationen von >100 ppmv, bevorzugt > 200 ppmv $N_2O$, besonders bevorzugt > 300 ppmv und ganz besonders bevorzugt > 300 bis 1000 ppmv $N_2O$ bezeichnet die Restgaskonzentration direkt vor Eintritt in das dem Absorptionsturm nachgeschaltete Katalysatorbett zur $NO_x$-Reduktion.

Um derartige Restgaskonzentrationen vor Eintritt in das Katalysatorbett zur $NO_x$-Reduktion zu erreichen, müssen in dem vorgeschalteten Katalysatorbett, das im Prozessgas angeordnet ist, eine Reduktion des $N_2O$-Gehaltes auf Werte von > 83 ppmv, bevorzugt >165 ppmv $N_2O$, besonders bevorzugt > 250 ppmv und ganz besonders bevorzugt > 250 bis 1200 ppmv $N_2O$ erzielt werden, sofern keine weitere Minderung des $N_2O$-Gehaltes durch etwaige dem Katalysatorbett zur $NO_x$-Reduktion im Restgas vorgeschaltete Maßnahmen bzw. Reaktionsstufen erfolgt.

In Abhängigkeit von der tatsächlich gebildeten Menge an $N_2O$ bei der $NH_3$-Oxidation, typischerweise von Mengen zwischen 500 und 2000 ppmv beträgt der erfindungsgemäße $N_2O$-Abbau im Katalysatorbett des Prozessgases 40-90%, bevorzugt 45-80%, besonders bevorzugt 50-70%, bezogen auf die anfänglich vorhandene Menge an $N_2O$.

In vorteilhafter Ausgestaltung des erfindungsgemäßen Verfahrens wird die gezielte Einstellung des $N_2O$-Abbaus im Katalysatorbett des Prozessgases (Sekundärkatalysator) durch Variationen der Schichtdicke bzw. Schütthöhe des Katalysatorbettes und/oder der Auswahl des Katalysatormaterials und/oder der Auswahl der Geometrie des Katalysatormaterials erreicht.

Als Katalysatormaterialien können dabei vor allem solche Materialien eingesetzt werden, wie diese für die Hochtemperaturzersetzung von $N_2O$ an sich bekannt sind.

Um dauerhaft bei den erforderlichen hohen Temperaturen von typischerweise zwischen 800°C und 1000°C arbeiten zu können, müssen die Katalysatoren eine hohe Temperaturstabilität aufweisen. Besonders geeignet sind deshalb beispielsweise hochtemperaturbeständige keramische Katalysatoren, die ein hochtemperaturfestes keramisches Material enthalten, das selbst katalytische Eigenschaften aufweisen kann und/oder als Träger für eine oder mehrere Aktivkomponenten dient. Die katalytisch aktive Komponente kann dabei homogen in der keramischen Matrix verteilt oder als oberflächlich aufgetragene Schicht vorliegen.

Als Aktivkomponenten geeignet sind neben Edelmetallen, z.B. der Platingruppe, insbesondere Übergangsmetalloxide und/oder übergangsmetallhaltige Mischoxide, vorzugsweise solche mit Perowskitstruktur, mit Perowskit-ähnlicher Struktur oder mit Spinellstruktur, wie diese bspw. in (N. Gunasekaran et al., Catal. Lett. (1995), 34 (3,4), pp. 373-382) beschrieben werden. Die Verwendung von Kobalt-haltigen Oxiden oder Mischoxiden, wie $Co_3O_4$ oder $LaCoO_3$ ist besonderes vorteilhaft.

Besonderes bevorzugt werden Katalysatoren mit einem porösen Träger aus polykristallinem oder glasartigem anorganischem Material, einer darauf aufgebrachten Ceroxid-Funktionsschicht und einer darauf aufgebrachten Schicht aus oxidischem Kobalt enthaltendem Material eingesetzt. Variationen davon werden In DE 10 2007 038 711 A1 offenbart, die hier explizit mit in den Offenbarungsgehalt mit einbezogen werden.

Weitere geeignete Katalysatormaterialien finden sich bspw. auch in EP 2 184 105, EP 1 301 271 oder DE19848595 beschrieben.

Die Katalysatormaterialien können als Formkörper beliebiger Größe und Geometrie durch in der keramischen Verarbeitung bekannte Formgebungsverfahren, wie Trockenpressen, Granulieren oder Extrudieren ausgestaltet werden.

Die Form und Größe bzw. der Äquivalentdurchmesser der Formkörper wird so gewählt, dass mit der gewählten Menge an Katalysator der gewünschte $N_2O$-Abbau bei möglichst geringem Druckverlust der Katalysatorschüttung bzw. -packung erreicht wird. Bevorzugte Geometrien der Formkörper sind Zylinder, Hohlzylinder, Mehrloch-zylinder, gelochte und ungelochte Tri- oder Polylobes oder Wabenstrukturen.

Die Untergrenze des Äquivalenzdurchmessers der Katalysatorformkörper beträgt erfindungsgemäß typischerweise > 1,5 mm, bevorzugt > 3 mm und insbesondere > 5 mm und die Obergrenze des Äquivalenzdurchmessers beträgt typischerweise < 20mm, bevorzugt < 15 mm und insbesondere < 10 mm.

Der äquivalente Durchmesser eines Körpers bzw. eines Teilchens ist der Durchmesser einer Kugel mit dem gleichen Volumen zu Oberflächenverhältnis wie das Teilchen. Er ist durch die Formel

$$d_e = 6V/A$$

zu berechnen, in der V = Volumen des Teilchens und A = Oberfläche des Teilchens bezeichnet.

Der Druckverlust über die Schüttung bzw. Packung der Katalysatorformkörper beträgt in der Regel <30 mbar, bevorzugt <25 mbar, besonders bevorzugt < 20 mbar, ganz besonders bevorzugt <15 mbar insbesondere <10 mbar.

Die Schütt- bzw. Packungshöhe des Katalysatorbettes des Prozessgases (Sekundärkatalysator) beträgt üblicherweise 3-30 cm, bevorzugt 5-20 cm, besonders bevorzugt 10 - 20 cm.

Nach Durchströmung des Sekundärkatalysators und nachfolgender Abkühlung wird das Prozessgas in den Absorptionsturm der $HNO_3$-Anlage geleitet. Hier wird das gebildete $NO_X$ mit $H_2O$ zu Salpetersäure umgesetzt und es verbleibt ein sog. Restgas, welches je nach Dimensionierung des Absorptionsturmes und vorherrschendem Druck und Temperatur am Austritt des Absorptionsturms einen Restgehalt von ca. 200 - 2000 ppmv $NO_X$ und einen $N_2O$-Gehalt von > 100 ppmv, bevorzugt von > 200 ppmv, besonders bevorzugt von > 300 ppmv und ganz besonders bevorzugt von > 300 bis 1000 ppmv aufweist.

Nach stufenweiser Aufheizung des Restgases wird dieses dann zur $NO_X$-Reduktion und weiteren $N_2O$-Minderung durch ein Katalysatorbett geleitet, welches mindestens einen mit Eisen beladenen Zeolith-Katalysator enthält. Dabei wird dem Restgas zur $NO_X$-Reduktion vor Eintritt in das Katalysatorbett eine solche Menge an $NH_3$ zugesetzt wird, dass am Austritt des Katalysatorbettes eine $NO_X$ -Konzentration von <40ppmv, bevorzugt <20 ppmv, besonders bevorzugt <10 ppmv, ganz besonders bevorzugt <5 ppmv, insbesondere <3 ppmv oder äußerst besonders bevorzugt <3 bis 0 ppmv resultiert.

Die sonstigen Betriebsparameter wie Temperatur, Druck und Raumgeschwindigkeit und/oder die etwaige Zugabe spezifischer Reduktionsmittel für $N_2O$ werden derart gewählt, dass eine $N_2O$-Konzentration von <200 ppmv, besonders von <100 ppmv, ganz besonders von <50 ppmv inbesondere von <30 ppmv und äußerst bevorzugt von <30 bis 0 ppmv resultiert.

Typischerweise beträgt die Verringerung des Gehaltes an $N_2O$ im Katalysatorbett, das im Restgas angeordnet ist, mindestens 50 %, vorzugsweise mindestens 70 %, besonders bevorzugt mindestens 80 % und ganz besonders bevorzugt 90 bis 100 %, bezogen auf den Gehalt an $N_2O$ am Eintritt in dieses Katalysatorbett. Dieser Abbaugrad kann durch entsprechende Einstellung der oben genannten Betriebsparameter und/oder die durch Zugabe spezifischer Reduktionsmittel für $N_2O$, vorzugsweise Kohlenwasserstoffe, erzielt werden. Dem Fachmann sind die Maßnahmen sowie die Dimensionierung des Katalysatorbettes zwecks Erreichens dieses Abbaugrades bekannt.

Unter dem Begriff Raumgeschwindigkeit ist im Rahmen dieser Beschreibung der Quotient aus Volumenanteilen Gasgemisch (gemessen bei 0°C und 1,014 bara) pro Stunde bezogen auf einen Volumenanteil Katalysator zu verstehen. Die Raumgeschwindigkeit kann somit über den Volumenstrom des Gases und/oder über die Katalysatormenge eingestellt werden.

Das Restgas wird üblicherweise mit einer Raumgeschwindigkeit von 200 bis 200.000 $h^{-1}$, vorzugsweise von 5.000 bis 100.000 $h^{-1}$, insbesondere von 5.000 bis 50.000 $h^{-1}$, durch das Katalysatorbett geleitet. Der Druck im Restgas, vor Eintritt in das Katalysatorbett beträgt im allgemeinen 1 bis 50 bar, vorzugsweise mindestens 2 bar, insbesondere mindestens 3 bar, ganz besonders bevorzugt von 4 bis 25 bar. Die Temperatur des Restgases vor Eintritt in das Katalysatorbett beträgt in der Regel 300-600°C, vorzugsweise 330 - 520°C.

Die Einstellung der o.g. Parameter ist dem Fachmann bspw. aus DE 101 12 444 A1 oder aus DE102 15 605 A bekannt.

In DE101 12 444 A1 wird dabei der $N_2O$-Abbau über Fe-Zeolith-Katalysatoren von Typ Fe-ZSM-5 durch reine Zersetzung bewirkt, welche durch restliches $NO_X$ katalysiert wird. Zur Reduktion des $NO_X$ wird eine Menge von 0,9 bis 1,3 mol $NH_3$ pro mol zu reduzierendes $NO_X$, insbesondere 1,0 bis 1,2 mol $NH_3$ pro mol zu reduzierendes $NO_X$ zum Restgasstrom hinzugegeben. Diese Zugabe an $NH_3$ kann direkt auf das erfindungsgemäße Verfahren übertragen werden.

Bei einer Auslegung gemäß DE 102 15 605 A, wird der $N_2O$-Abbau über Fe-Zeolith-Katalysatoren vom Typ Fe-BEA durch Zugabe entsprechender Reduktionsmittel für $N_2O$, vorzugsweise Kohlenwasserstoffen, wie Methan oder Propan erreicht. Die benötige Menge an Kohlenwasserstoff (KW) beträgt dabei etwa 0,2 - 1 mol KW / 1mol $N_2O$ am Eintritt in das Katalysatorbett. Bevorzugt sind Mengen von 0,2 - 0,7 mol KW / 1 mol $N_2O$, insbesondere 0,2 - 0,7 mol KW / 1mol $N_2O$. Der $NO_X$-Gehalt ist in diesem Fall vollständig, d. h. auf Werte <10, vorzugsweise <5, insbesondere <1 ppmv zu reduzieren. Hierzu ist die Zugabe entsprechender Mengen an Stickstoffhaltigen Reduktionsmitteln erforderlich. Im Falle von $NH_3$ betragen diese bezogen auf die $NO_X$-Eintrittskonzentration ca. 1- 2 mol $NH_3$ /mol $NO_X$ bevorzugt 1,2 -1,8 mol $NH_3$ /mol $NO_X$ insbesondere 1,3 -1,7 mol $NH_3$ /mol $NO_X$. Auch in diesem Fall kann die Zugabe an Kohlenwasserstoffen und $NH_3$ direkt auf das erfindungsgemäße Verfahren übertragen werden.

In besonderer Ausgestaltung der Erfindung ist das im Restgas angeordnete Katalysatorbett zur $NO_X$-Reduktion und weiteren $N_2O$-Minderung in mehrere Reaktionszonen oder räumlich getrennte Reaktionsstufen unterteilt. Dabei erfolgt bevorzugt eine gestufte Einspeisung von $NH_3$ in die einzelnen Reaktionszonen oder in die räumlich getrennten Reaktionszonen des im Restgas angeordneten Katalysatorbetts.

Die Art der Einbringung der Reduktionsmittel in den zu behandelnden Gasstrom ist im Sinne der Erfindung frei gestaltbar, solange dieses in Stromrichtung vor dem Katalysatorbett erfolgt. Sie kann zum Beispiel in der Eintrittsleitung vor dem Behälter oder unmittelbar vor dem Katalysatorbett erfolgen. Das Reduktionsmittel kann in Form eines Gases oder auch einer Flüssigkeit bzw. wässrigen Lösung eingebracht werden, die im zu behandelnden Gasstrom verdampft. Die Einspeisung erfolgt durch eine geeignete Vorrichtung, wie z. B. einem entsprechenden Druckventil oder entsprechend ausgestalteten Düsen, die in einen Mischer für den zu reinigenden Gasstrom und das zugeführte Reduktionsmittel mündet. Bei Verwendung verschiedener Reduktionsmittel für $NO_X$ und $N_2O$ kann die Zuführung und Einleitung in das zu reinigende Gas getrennt oder zusammen erfolgen.

Als Katalysatoren kommen mit Eisen beladene Zeolith-Katalysatoren zum Einsatz, welche bezogen auf die Masse an Zeolith bis zu 25 % Eisen enthalten, vorzugsweise jedoch 0,1 bis 10 %.

Erfindungsgemäß besonders bevorzugt eingesetzte mit Eisen beladene Zeolith-Katalysatoren enthalten im wesentlichen > 50 Gew%, insbesondere > 70 Gew% eines oder mehrerer mit Eisen beladener Zeolithe. So kann beispielsweise neben einem Fe-ZSM-5-Zeolith ein weiterer Eisen enthaltender Zeolith, wie z. B. ein eisenhaltiger Zeolith des FER-Typs, in dem erfindungsgemäß verwendeten Katalysator enthalten sein.

Darüber hinaus kann der erfindungsgemäß verwendete Katalysator weitere dem Fachmann bekannte Zusatzstoffe, wie z. B. Bindemittel, enthalten.

Erfindungsgemäß verwendete Katalysatoren basieren ganz besonders bevorzugt auf Zeolithen, in die durch einen Festkörper-Ionenaustausch Eisen eingebracht wurde.

Üblicherweise geht man hierfür von den kommerziell erhältlichen Ammonium-Zeolithen (z. B. $NH_4$-ZSM-5) und den entsprechenden Eisensalzen (z. B. $FeSO_4$ x 7 $H_2O$) aus und mischt diese auf mechanischem Wege intensiv miteinander in einer Kugelmühle bei Raumtemperatur (Turek et al.; Appl. Catal. 184, (1999) 249 - 256; EP-A-0 955 080). Die erhaltenen Katalysatorpulver werden anschließend in einem Kammerofen an der Luft bei Temperaturen im Bereich von 400 bis 600 °C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpem extrudiert. Als Bindemittel eignen sich alle üblicherweise verwendeten Binder, die gebräuchlichsten sind hierbei Aluminiumsilikate wie z. B. Kaolin. Es können natürlich auch durch Ionenaustausch in der flüssigen Phase erzeugte mit Eisen beladene Zeolithe eingesetzt werden, beispielsweise solche, die aus der H-Form und/oder der $NH_4$-Form der Zeolithe durch Austausch mit einer wässrigen Lösung von Eisensalzen erzeugt wurden.

Bevorzugt werden mit Eisen beladene Zeolith-Katalysatoren eingesetzt, bei denen der Zeolith ausgewählt wird aus der Gruppe der Typen MFI, BEA, FER, MOR, FAU und/oder MEL und ganz besonders bevorzugt aus der Gruppe der Typen MFI und/oder BEA und/oder FER.

Erfolgt der weitere $N_2O$-Abbau im Katalysatorbett des Restgases durch Zersetzung in $N_2$ und $O_2$ werden ganz besonders bevorzugt mit Eisen beladene Zeolithe vom Typ MFI und/oder BEA und/oder FER eingesetzt, insbesondere ein mit Eisen beladener ZSM-5-Zeolith.

Erfolgt der weitere $N_2O$-Abbau im Katalysatorbett des Restgases durch Reduktion des $N_2O$ mit Kohlenwasserstoffen werden ganz besonders bevorzugt mit Eisen beladene Zeolithe vom Typ MFI, BEA, FER, MOR, FAU und/oder MEL eingesetzt, insbesondere mit Eisen beladene Zeolithe vom Typ MFI und/oder BEA.

Im erfindungsgemäßen Verfahren bzw. in der erfindungsgemäßen Vorrichtung ist im Katalysatorbett des Restgases auch der Einsatz solcher Zeolithe eingeschlossen, in welchen das Gitteraluminium teilweise durch ein oder mehrere Elemente isomorph substituiert ist, beispielsweise durch ein oder mehrere Elemente ausgewählt aus B, Be, Ga, Fe, Cr, V, As, Sb und Bi ersetzt ist. Ebenso eingeschlossen ist der Einsatz von Zeolithen, bei denen das Gittersilicium durch ein oder mehrere Elemente isomorph substituiert ist, beispielsweise durch ein oder mehrere Elemente ausgewählt aus Ge, Ti, Zr und Hf ersetzt ist.

Genaue Angaben zu Aufbau oder Struktur der erfindungsgemäß bevorzugt eingesetzten Zeolithe werden im Atlas of Zeolite Structure Types, Elsevier, 4th revised Edition 1996, gegeben, auf den hiermit ausdrücklich Bezug genommen wird.

Ganz besonders bevorzugt kommen im erfindungsgemäßen Verfahren bzw. in der erfindungsgemäßen Vorrichtung die weiter oben definierten Zeolith-Katalysatoren zum Einsatz, die mit Wasserdampf behandelt worden sind ("gesteamte" Katalysatoren). Durch eine derartige Behandlung wird das Gitter der Zeolithen dealuminiert; diese Behandlung ist dem Fachmann an sich bekannt. Überraschenderweise zeichnen sich diese hydrothermal behandelten Zeolith-Katalysatoren im erfindungsgemäßen Verfahren durch eine besonders hohe Aktivität aus.

Bevorzugt werden hydrothermal behandelte Zeolith-Katalysatoren eingesetzt, die mit Eisen beladen worden sind und bei denen das Verhältnis von Extra-Gitter-Aluminium zu Gitter-Aluminium mindestens 1 : 2, vorzugsweise 1 : 2 bis 20 : 1 beträgt.

Die Ausführung des Katalysatorbetts im Restgas ist im Sinne der Erfindung frei gestaltbar. So können beispielsweise der Katalysator oder die Katalysatoren in einem axial oder lateral, vorzugsweise radial durchströmten Katalysatorbett angeordnet sein, die in einem oder mehreren Behältern untergebracht sind.

In weiterer Ausgestaltung der Erfindung sind zwischen dem im Prozessgas angeordneten Katalysatorbett zur $N_2O$-Zersetzung und dem im Restgas angeordneten Katalysatorbett zur $NO_x$-Reduktion und weiteren $N_2O$-Minderung eine oder mehrere weitere Stufen zum $N_2O$ und/oder $NO_x$ Abbau angeordnet. In diesen Stufen werden dabei an sich bekannte Verfahren zur $N_2O$- und $NO_x$-Minderung eingesetzt werden. Dies kann bevorzugt katalytisch erfolgen.

Die Erfindung betrifft auch eine Salpetersäureanlage, bei welcher eine katalytische Beseitigung des bei der katalytischen $NH_3$-Oxidation gebildeten $N_2O$ im Prozessgas und weitere Minderung des $N_2O$-Gehalte und eine Reduzierung des $NO_x$-Gehaltes im Restgas nachgeschaltet zum Absorptionsturm erfolgt.

Die Anlage ist gekennzeichnet durch mindestens folgende Elemente:

A) Reaktor zur katalytischen Oxidation von $NH_3$ mit Sauerstoff zur Erzeugung eines $NO_x$ enthaltenden Prozessgases,

B) Absorptionsturm zur Umsetzung des gebildeten $NO_x$ aus dem Prozessgas mit einem Absorptionsmittel, vorzugsweise Wasser, wobei ein $NO_x$ und $N_2O$ enthaltendes Restgas verbleibt,

C) mindestens ein erstes Katalysatorbett zur $N_2O$-Zersetzung, welches vom Prozessgas durchströmt wird und in Strömungsrichtung nach der katalytischen $NH_3$-Oxidation und vor dem Absorptionsturm angeordnet ist,

D) mindestens ein zweites Katalysatorbett zur $NO_x$-Reduktion und weiteren $N_2O$-Minderung, welches vom Restgas durchströmt wird und in Strömungsrichtung nach dem Absorptionsturm angeordnet ist, und

E) mindestens eine Vorrichtung zur Einspeisung von gasförmigem Reduktionsmittel in das Restgas, welche in Strömungsrichtung nach dem Absorptionsturm und vor dem zweiten Katalysatorbett angeordnet ist, wobei

F) das erste Katalysatorbett einen für die Zersetzung von $N_2O$ geeigneten Katalysator enthält, vorzugsweise einen Katalysator, der als Aktivkomponente Übergangsmetalloxide und/oder übergangsmetallhaltige Mischoxide, vorzugsweise Mischoxide mit Perowskitstruktur, mit Perowskit-ähnlicher Struktur oder mit Spinellstruktur, und/oder Edelmetalle enthält und wobei

G) das zweite Katalysatorbett einen Katalysator enthält, der mit Eisen beladene Zeolithe enthält.

Weitere bevorzugte Ausgestaltungen der erfindungsgemäßen Vorrichtung sind in den Unteransprüchen beschrieben.

Die nachstehenden Beispiele 1, 3 und 5 sowie Vergleichsbeispiele 2, 4 und 6 erläutern die Erfindung ohne diese zu beschränken.

Beispiele 1, 3, und 5 sowie die Vergleichsbeispiele 2, 4 und 6 demonstrieren am Beispiel einer DeNO$_x$-Stufe, welche einen mit Eisen beladenen Zeolith-Katalysator enthält, die Auswirkung der $N_2O$-Eintrittskonzentration auf den

erreichbaren $NO_x$-Abbau. Die in Beispielen 1, 3 und 5 gewählte $N_2O$-Eintrittskonzentration entspricht dabei einem $N_2O$-Gehalt, welcher aus einem erfindungsgemäßen Betrieb der Katalysatorstufe im Prozessgasstrom resultiert. Die $N_2O$-Eingangkonzentration aus den Vergleichsbeispielen 2, 4 und 6 gibt einen Vergleich zu einem nicht erfindungsgemäßen Betrieb der Katalysatorstufe im Prozessgasstrom.

Bei den in den Versuchen 1 bis 6 eingesetzten Katalysatoren handelte es sich um mit Eisen beladene Zeolithe vom Typ ZSM-5 (Beispiele 1 bis 4) bzw. um mit Eisen beladene Zeolithe vom Typ BEA (Beispiele 5 und 6), welche durch Festköper-Ionenaustausch ausgehend von ZSM-5- bzw. BEA-Zeolith-Pulver in Ammonium-Form hergestellt worden waren.

Detaillierte Angaben zur Präparation können aus M. Rauscher, K. Kesore, R. Mönnig, W. Schwieger, A. Tißler, T. Turek: "Preparation of highly active Fe-ZSM-5 catalyst through solid state ion exchange for the catalytic decomposition of N2O" in Appl. Catal. 184 (1999) 249-256 entnommen werden. Das erhaltene Katalysatorpulver wurde 6 h bei 823 K an der Luft kalziniert, gewaschen und über Nacht bei 383 K getrocknet. Nach Zusatz entsprechender Binder folgte die Extrusion zu zylindrischen Katalysatorkörpern.

Bei einem nominalen Austauschgrad von 100% und einem Modul ($SiO_2/Al_2O_3$-Verhältnis) von jeweils ca. 25 betrug der Eisengehalt der Katalysatorproben vor ihrer Formgebung jeweils ca. 5%.

Zur Durchführung der Versuche für die Beispiele 1 bis 6 wurden die erhalten Extrudate gebrochen und eine Kornfraktion von 0,5-1,25 mm ausgesiebt. Hiervon wurden dann 1,75g (vom Katalysator Fe-ZSM-5) bzw. 1,50g (vom Katalysator Fe-BEA) mit Glasperlen jeweils auf ein Schüttungsvolumen von 12 ml verdünnt und in einen entsprechenden Strömungsrohrreaktor eingefüllt.

Die Betriebstemperatur im Reaktorrohr wurde durch elektrische Beheizung eingestellt. Die Analyse der in den Reaktor ein- und austretenden Gasströme erfolgte mit Hilfe eines FTIR-Spektrometers (Modell 5700, Fa. Thermo), das mit einer beheizten 2m Langweg-Gasküvette ausgestattet war.

Die genauen Versuchs- bzw. Betriebsbedingungen der einzelnen Versuche sind der nachstehenden Tabelle 1 zu entnehmen.

Tabelle 1: Betriebsbedingungen zu den Versuchen 1 bis 6

| Versuch | | | 1 | 2 | 3 | 4 | 5 | 6 |
|---|---|---|---|---|---|---|---|---|
| Prozessparameter | T | °C | 440 | 440 | 420 | 420 | 400 | 400 |
| | $RG^{*)}$ | $h^{-1}$ | 60.000 | 60.000 | 40.000 | 40.000 | 50.000 | 50.000 |
| | P | bara | 4,0 | 4,0 | 4,0 | 4,0 | 4,0 | 4,0 |
| Gaszusammensetzung am Eintritt in den Versuchsreaktor | $NO_X$ | ppmv | 1001 | 1012 | 1007 | 1000 | 510 | 502 |
| | $N_2O$ | ppmv | 549 | 83 | 571 | 92 | 501 | 98 |
| | $H_2O$ | Vol.% | ~0,31 | ~0,31 | ~0,31 | ~0,31 | ~0,32 | ~0,32 |
| | $O_2$ | Vol.% | 1,0 | 1,0 | 1,0 | 1,0 | 1,0 | 1,0 |
| | $N_2O/NO_X$ | mol/mol | 0,55 | 0,08 | 0,57 | 0,09 | 0,98 | 0,20 |
| | $NH_3$ | ppmv | 1138 | 1088 | 1306 | 1175 | 664 | 548 |

$^{*)}$ RG = Raumgeschwindigkeit

Die Ergebnisse der Versuche 1 bis 6 sind in Tabelle 2 wiedergegeben.

Tabelle 2: Versuchsergebnisse

| Versuch | | | 1 | 2 | 3 | 4 | 5 | 6 |
|---|---|---|---|---|---|---|---|---|
| Gaszusammensetzung am Austritt des Versuchsreaktors | $NO_X$ | ppmv | 32 | 81 | 8 | 27 | 1 | 16 |
| | $N_2O$ | ppmv | 107 | 11 | 111 | 11 | 210 | 27 |
| Abbaugrad am Austritt des Versuchsreaktors | $NO_X$ | % | 96,8 | 80,0 | 99,2 | 97,3 | 99,8 | 96,8 |
| | $N_2O$ | % | 80,5 | 86,7 | 80,6 | 88,0 | 58,1 | 72,4 |

$^{*)}$ RG = Raumgeschwindigkeit

Die Zugabe an $NH_3$ als Reduktionsmittel für $NO_x$ erfolgte dabei in einer solchen Menge, welche maximal bis zum Auftreten eines analytisch signifikanten $NH_3$-Schlupfs (ca. 1- 2 ppmv) zugegeben werden kann; d.h. die angegebene Restkonzentration an $NO_x$ entspricht der minimal möglichen Restkonzentration an $NO_X$, bzw. der Abbaugrad an $NO_X$ dem maximalen Abbaugrad, welcher durch Zugabe von $NH_3$ gerade noch erreicht werden kann, ohne dass ein

$NH_3$-Schlupf auftritt.

Wie den Tabellen 1 und 2 zu entnehmen, kann im Falle einer hohen $N_2O$-Eintrittskonzentration (Versuche 1, 3 und 5) jeweils ein sehr viel höherer $NO_X$-Abbau erzielt werden als unter sonst gleichen Bedingungen bei reduzierter $N_2O$-Eintrittskonzentration, wie in Beispielen 2, 4 und 6. So kann im erfindungsgemäßen Versuch 1 im Vergleich zum Vergleichsversuch 2 die $NO_X$-Restkonzentration von 81 ppmv auf 32 ppmv abgesenkt werden. Im erfindungsgemäßen Versuch 3 kann die $NO_X$-Restkonzentration im Vergleich zum Vergleichsversuch 4 von 27 auf 8 reduziert werden.

Im Versuch 5 schließlich kann im Vergleich zu Versuch 6 sogar eine mehr oder weinger vollständige $NO_X$-Reduktion erreicht werden. Dies ist von besonderer Bedeutung, da, wie eingangs erwähnt, gemäß dem in DE 102 15 605 A beschriebenen Verfahren bei vollständiger $NO_X$-Reduktion eine weitergehende $N_2O$-Reduktion durch Zusatz von Kohlenwasserstoffen, vorzugsweise mit Methan erreicht werden kann.

Insgesamt kann obigen Beispielen entnommen, dass bei einer zu starken Reduzierung des $N_2O$-Gehalte im vorgeschalteten Katalysatorbett des Prozessgases, wie dieses üblicherweise angestrebt und realisiert wird, die DeN-$O_X$-Leistung dem vom Restgas durchströmten nachgeschalteten Katalysatorbett deutlich gemindert ist und der gewünschte Abbaugrad an $NO_X$ unter Umständen nicht mehr erreicht werden kann.

Ohne das Wissen um diesen völlig unerwarteten Zusammenhang, bliebe dem Fachmann nur die Möglichkeit die Auslegung des vom Restgas durchströmten nachgeschalteten Katalysatorbettes entsprechend anzupassen, d.h. bei gegebenen Prozessparametern (Druck, Temperatur, Volumenstrom) die Größe des Reaktors bzw. das Katalysatorvolumen dieses Katalysatorbettes entsprechend anzuheben. Viel geschickter ist es jedoch, die Abbauleistung der Katalysatorstufe zur $N_2O$-Zersetzung im Prozessgas erfindungsgemäß so anzupassen, dass vor Eintritt in das Katalysatorbett eine Restkonzentration an $N_2O$ von >100 ppmv, bevorzugt >200 ppmv und besonders bevorzugt > 300 ppmv resultiert und ein molares $N_2O/NO_X$-Verhältnis von >0,25 vorzugsweise von >0,5 resultiert.

Der geminderte Abbaugrad an $N_2O$ wird dabei in dem vom Restgas durchströmten nachgeschalteten Katalysatorbett, d.h. durch das mit Fe-Zeolith-Katalysator beladene Katalysatorbett im Restgas ausgeglichen, welches parallel zur $NO_X$-Reduktion erfindungsgemäß auch einen $N_2O$-Abbau bewirkt. Diese ist in den Versuchen 1 bis 4, bei welchem der $N_2O$-Abbau durch Zersetzung in $N_2$ und $O_2$ erfolgt, nur geringfügig abhängig von der $N_2O$-Eintrittskonzentration und beträgt unter den gewählten Prozessbedingungen (Druck, Temperatur, Raumgeschwindigkeit) zwischen 80 und 90%.

## Patentansprüche

1. Verfahren zur Herstellung von Salpetersäure durch katalytische Oxidation von $NH_3$ mit Sauerstoff und anschließende Umsetzung des gebildeten $NO_X$ mit einem Absorptionsmittel in einem Absorptionsturm umfassend ein Katalysatorbett zur $N_2O$-Zersetzung, welches im Prozessgas in Strömungsrichtung nach der katalytischen $NH_3$-Oxidation und vor dem Absorptionsturm angeordnet ist, und ein Katalysatorbett zur $NO_X$-Reduktion und weiteren $N_2O$-Minderung, welches im Restgas in Strömungsrichtung nach dem Absorptionsturm angeordnet ist,

   • wobei in dem im Prozessgas angeordneten Katalysatorbett zur $N_2O$-Zersetzung maximal soviel $N_2O$ abgebaut wird, dass vor Eintritt des Restgases in das Katalysatorbett zur $NO_X$-Reduktion der $N_2O$-Gehalt > 100 ppmv beträgt und ein molares $N_2O/NO_X$-Verhältnis von > 0,25 resultiert, und
   • wobei das im Restgas angeordnete Katalysatorbett zur $NO_X$-Reduktion und weiteren $N_2O$-Minderung mindestens einen mit Eisen beladenen Zeolith-Katalysator enthält, und
   • wobei dem Restgas vor Eintritt in das Katalysatorbett eine solche Menge an $NH_3$ zugesetzt wird, dass am Austritt des Katalysator-bettes eine $NO_X$-Konzentration von < 40ppmv resultiert, und
   • wobei die Betriebsparameter Druck, Temperatur und Raumgeschwindigkeit derart gewählt werden, dass eine $N_2O$-Konzentration von < 200 ppmv resultiert.

2. Verfahren nach Anspruch 1, **dadurch gekennzeichnet, dass** die gezielte Einstellung des $N_2O$-Abbaus in dem im Prozessgas angeordneten Katalysatorbett durch Variationen der Schichtdicke/Schichthöhe des Katalysatorbettes und/oder der Auswahl des Katalysatormaterials und/oder der Auswahl der Geometrie des Katalysatormaterials erreicht wird.

3. Verfahren nach einem der Ansprüche 1 oder 2, **dadurch gekennzeichnet, dass** das im Prozessgas angeordnete Katalysatorbett einen für die Zersetzung von $N_2O$ geeigneten Katalysator enthält, vorzugsweise einen Katalysator, der als Aktivkomponente Übergangsmetalloxide und/oder übergangsmetallhaltige Mischoxide, vorzugsweise Mischoxide mit Perowskitstruktur, mit Perowskit-ähnlicher Struktur oder mit Spinellstruktur, und/oder Edelmetalle enthält.

4. Verfahren nach einem der vorstehenden Ansprüche, **dadurch gekennzeichnet, dass** das Katalysatormaterial des im Prozessgas angeordneten Katalysatorbettes Kobalthaltige Oxide oder Mischoxide als Aktivkomponenten enthält, und insbesondere ein Katalysatormaterial ist, das einen porösen Träger aus polykristallinem oder glasartigem anorganischem Material, einer darauf aufgebrachten Ceroxid-Funktionsschicht und einer darauf aufgebrachten Schicht aus oxidischem Kobalt enthaltendem Material umfasst.

5. Verfahren nach einem der vorstehenden Ansprüche, **dadurch gekennzeichnet, dass** das Katalysatormaterial des im Prozessgas angeordneten Katalysatorbettes als Formkörper ausgestaltet ist, der die Geometrie eines Zylinders, Hohlzylinders, Mehrlochzylinders, gelochte und ungelochte Tri- oder Polylobes oder Wabenstrukturen aufweist, wobei das Katalysatormaterial des im Prozessgas angeordneten Katalysatorbettes vorzugsweise als Formkörper ausgestaltet ist, dessen Äquivalenzdurchmesser eine Untergrenze von > 1,5 mm, bevorzugt von > 3mm, und insbesondere von > 5 mm aufweist und eine Obergrenze von < 20 mm, bevorzugt von < 15 mm, und insbesondere von < 10 mm aufweist.

6. Verfahren nach einem der vorstehenden Ansprüche, **dadurch gekennzeichnet, dass** der Druckverlust über das Katalysatormaterial des im Prozessgas angeordneten Katalysatorbettes < 30 mbar, bevorzugt < 25 mbar, besonders bevorzugt < 20 mbar, ganz besonders bevorzugt < 15 mbar, und insbesondere < 10 mbar beträgt, wobei insbesondere die Schütthöhe des Katalysatormaterials des im Prozessgas angeordneten Katalysatorbettes 3 - 30 cm, bevorzugt 5 - 20 cm, und besonders bevorzugt 10 - 20 cm beträgt.

7. Verfahren nach einem der vorstehenden Ansprüche, **dadurch gekennzeichnet, dass** der $N_2O$-Abbau im Katalysatorbett des Prozessgases 40-90%, bevorzugt 45-80%, besonders bevorzugt 50-70%, bezogen auf die anfänglich vorhandene Menge an $N_2O$, beträgt.

8. Verfahren nach einem der vorstehenden Ansprüche, **dadurch gekennzeichnet, dass** die Raumgeschwindigkeit mit der das Restgas über das Katalysatormaterial des im Restgas angeordneten Katalysatorbettes geleitet wird, 200 bis 200.000 $h^{-1}$, vorzugsweise 5.000 bis 10.000 $h^{-1}$, und besonders bevorzugt 5.000 bis 50.000 $h^{-1}$ beträgt, dass der Druck im Restgas vor Eintritt in das Katalysatormaterial des im Restgas angeordneten Katalysatorbettes, 1 bis 50 bar, vorzugsweise mindestens 2 bar, insbesondere mindestens 3 bar, ganz besonders bevorzugt von 4 bis 25 bar. beträgt, und dass die Temperatur im Restgas vor Eintritt in das Katalysatormaterial des im Restgas angeordneten Katalysatorbettes 300°C bis 600°C, und vorzugsweise 330°C bis 520°C beträgt.

9. Verfahren nach einem der vorstehenden Ansprüche, **dadurch gekennzeichnet, dass** die Betriebsparameter Druck, Temperatur und Raumgeschwindigkeit des im Restgas angeordneten Katalysatorbettes so eingestellt werden und/oder dass Kohlenwasserstoffe als Reduktionsmittel für $N_2O$ in dieses Katalysatorbett zugegeben werden, dass die Verringerung des Gehaltes an $N_2O$ in diesem Katalysatorbett mindestens 50 %, vorzugsweise mindestens 70 %, besonders bevorzugt mindestens 80 % und ganz besonders bevorzugt 90 bis 100 %, bezogen auf den Gehalt an $N_2O$ am Eintritt in dieses Katalysatorbett beträgt.

10. Verfahren nach einem der vorstehenden Ansprüche, **dadurch gekennzeichnet, dass** dem Restgas vor Eintritt in das Katalysatormaterial des im Restgas angeordneten Katalysatorbettes eine Menge von 0,9 bis 1,3 mol $NH_3$ pro mol zu reduzierendes $NO_x$, und insbesondere 1,0 bis 1,2 mol $NH_3$ pro mol zu reduzierendes $NO_x$, zugesetzt wird.

11. Verfahren nach einem der Ansprüche 1 bis 10, **dadurch gekennzeichnet, dass** dem Restgas vor Eintritt in das Katalysatormaterial des im Restgas angeordneten Katalysatorbettes Kohlenwasserstoffe zugemischt werden, wobei dabei eine Menge von 0,2 - 1 mol Kohlenwasserstoff / 1 mol zu reduzierendes $N_2O$, bevorzugt 0,2-0,7 mol Kohlenwasserstoff / 1 mol zu reduzierendes $N_2O$, und insbesondere 0,2-0,7 mol Kohlenwasserstoffe / 1 mol zu reduzierendes $N_2O$ zugegeben werden und wobei dabei bezogen auf die $NO_x$-Eintrittkonzentration 1 - 2 mol $NH_3$ / mol $NO_x$, bevorzugt 1,2 - 1,8 mol $NH_3$ /mol $NO_x$, und insbesondere 1,2 - 1,7 mol $NH_3$ /mol $NO_x$ zugegeben werden.

12. Verfahren nach einem der vorstehenden Ansprüche, **dadurch gekennzeichnet, dass** das im Restgas angeordnete Katalysatorbett zur $NO_x$-Reduktion und weiteren $N_2O$-Minderung in mehrere Reaktionszonen oder räumlich getrennte Reaktionsstufen unterteilt ist und dass vorzugsweise eine gestufte Einspeisung von $NH_3$ in die einzelnen Reaktionszonen oder in die räumlich getrennten Reaktionsstufen des im Restgas angeordneten Katalysatorbetts erfolgt.

13. Verfahren nach einem der vorstehenden Ansprüche, **dadurch gekennzeichnet, dass** der mit Eisen beladene Zeolith-Katalysator des im Restgas angeordneten Katalysatorbettes bezogen auf die Masse an Zeolith bis zu 25 % Eisen enthält, vorzugsweise 0,1 bis 10 % Eisen enthält.

**14.** Verfahren nach einem der vorstehenden Ansprüche, **dadurch gekennzeichnet, dass** der mit Eisen beladene Zeolith-Katalysator des im Restgas angeordneten Katalysatorbettes > 50 Gew% und bevorzugt > 70 Gew% eines mit Eisen beladenen Zeoliths oder mehrerer mit Eisen beladener Zeolithe enthält.

**15.** Verfahren nach einem der vorstehenden Ansprüche, **dadurch gekennzeichnet, dass** der mit Eisen beladene Zeolith-Katalysator des im Restgas angeordneten Katalysatorbettes ein Zeolith vom Typ MFI, BEA, FER, MOR, FAU und/oder MEL ist und ganz besonders bevorzugt ein mit Eisen beladener Zeolith vom Typ MFI und/oder BEA und/oder FER ist.

**16.** Verfahren nach einem der vorstehenden Ansprüche, **dadurch gekennzeichnet, dass** der mit Eisen beladene Zeolith-Katalysator des im Restgas angeordneten Katalysatorbettes, einen Zeolith umfasst, dessen Gitteraluminium ganz oder teilweise durch ein oder mehrere Elemente isomorph substituiert ist, wobei die Elemente ausgewählt werden aus der Gruppe umfassend B, Be, Ga, Fe, Cr, V, As, Sb und Bi oder ein Zeolith umfasst, dessen Gittersilizium ganz oder teilweise durch ein oder mehrere Elemente ausgewählt aus der Gruppe Ge, Ti, Zr und Hf ersetzt ist und/oder dass der mit Eisen beladene Zeolith-Katalysator des im Restgas angeordneten Katalysatorbettes, einen Zeolith umfasst, der mit Wasserdampf hydrothermal vorbehandelt ist, wobei der mit Wasserdampf hydrothermal vorbehandelte Zeolith vorzugsweise ein Verhältnis von Extra-Gitter-Aluminium zu Gitter-Aluminium von mindestens 1 : 2, vorzugsweise 1 : 2 bis 20 : 1 aufweist.

**17.** Verfahren nach einem der vorstehenden Ansprüche, **dadurch gekennzeichnet, dass** das im Restgas angeordnete Katalysatorbett axial, lateral oder radial durchströmt wird.

**18.** Verfahren nach einem der vorstehenden Ansprüche, **dadurch gekennzeichnet, dass** zwischen dem im Prozessgas angeordneten Katalysatorbett zur $N_2O$-Zersetzung und dem im Restgas angeordneten Katalysatorbett zur $NO_x$-Reduktion und weiteren $N_2O$-Minderung eine oder mehrere weitere Stufen zum $N_2O$ und/oder $NO_x$ Abbau angeordnet sind.

**19.** Salpetersäureanlage, bei welcher eine katalytische Beseitigung des bei der katalytischen $NH_3$-Oxidation gebildeten $N_2O$ im Prozessgas sowie eine weitere Minderung des $N_2O$-Gehalte und eine Reduzierung des $NO_x$-Gehaltes im Restgas nachgeschaltet zum Absorptionsturm erfolgt, **gekennzeichnet durch** mindestens folgende Elemente:

A) Reaktor zur katalytischen Oxidation von $NH_3$ mit Sauerstoff zur Erzeugung eines $NO_x$ enthaltenden Prozessgases,
B) Absorptionsturm zur Umsetzung des gebildeten $NO_x$ aus dem Prozessgas mit einem Absorptionsmittel, vorzugsweise Wasser, wobei ein $NO_x$ und $N_2O$ enthaltendes Restgas verbleibt,
C) mindestens ein erstes Katalysatorbett zur $N_2O$-Zersetzung, welches vom Prozessgas durchströmt wird und in Strömungsrichtung nach der katalytischen $NH_3$-Oxidation und vor dem Absorptionsturm angeordnet ist,
D) mindestens ein zweites Katalysatorbett zur $NO_x$-Reduktion und weiterer $N_2O$-Minderung, welches vom Restgas durchströmt wird und in Strömungsrichtung nach dem Absorptionsturm angeordnet ist, und
E) mindestens eine Vorrichtung zur Einspeisung von gasförmigem Reduktionsmittel in das Restgas, welche in Strömungsrichtung nach dem Absorptionsturm und vor dem zweiten Katalysatorbett angeordnet ist, wobei
F) das erste Katalysatorbett einen für die Zersetzung von $N_2O$ geeigneten Katalysator enthält, vorzugsweise einen Katalysator, der als Aktivkomponente Übergangsmetalloxide und/oder übergangsmetallhaltige Mischoxide, vorzugsweise Mischoxide mit Perowskitstruktur, mit Perowskit-ähnlicher Struktur oder mit Spinellstruktur, und/oder Edelmetalle enthält und wobei
G) das zweite Katalysatorbett einen Katalysator enthält, der der mindestens einen mit Eisen beladenen Zeolith enthält.

**20.** Salpetersäureanlage nach Anspruch 19, **dadurch gekennzeichnet, dass** das Katalysatormaterial des ersten Katalysatorbettes Kobalt-haltige Oxide oder Mischoxide als Aktivkomponenten enthält, und insbesondere ein Katalysatormaterial ist, das einen porösen Träger aus polykristallinem oder glasartigem anorganischem Material, einer darauf aufgebrachten Ceroxid-Funktionsschicht und einer darauf aufgebrachten Schicht aus oxidischem Kobalt enthaltendem Material umfasst.

**21.** Salpetersäureanlage nach einem der Ansprüche 19 bis 20, **dadurch gekennzeichnet, dass** die Schütthöhe des Katalysatormaterials des esten Katalysatorbettes 3 - 30 cm, bevorzugt 5 - 20 cm, und besonders bevorzugt 10 - 20 cm beträgt.

**22.** Salpetersäureanlage nach einem der Ansprüche 19 bis 21, **dadurch gekennzeichnet, dass** der mit Eisen beladene Zeolith-Katalysator im zweiten Katalysatorbett ein Zeolith vom Typ MFI, BEA, FER, MOR, FAU und/oder MEL ist und ganz besonders bevorzugt ein mit Eisen beladener Zeolith vom Typ MFI und/oder BEA und/oder FER ist.

**Claims**

**1.** A process for preparing nitric acid by catalytic oxidation of $NH_3$ by means of oxygen and subsequent reaction of the $NO_x$ formed with an absorption medium in an absorption tower, which comprises a catalyst bed for $N_2O$ decomposition arranged in the process gas downstream of the catalytic $NH_3$ oxidation and upstream of the absorption tower and a catalyst bed for $NO_x$ reduction and effecting a further decrease in the amount of $N_2O$ arranged in the tailgas downstream of the absorption tower,

> • wherein the amount of $N_2O$ removed in the catalyst bed for $N_2O$ removal arranged in the process gas is not more than that which results in an $N_2O$ content of > 100 ppmv and a molar $N_2O/NO_x$ ratio of > 0.25 before entry of the tailgas into the catalyst bed for $NO_x$ reduction and
> • the catalyst bed for $NO_x$ reduction and effecting a further decrease in the amount of $N_2O$ arranged in the tailgas contains at least one iron-loaded zeolite catalyst and
> • $NH_3$ is added to the tailgas before entry into the catalyst bed in such an amount that an $NO_x$ concentration of < 40 ppmv results at the outlet from the catalyst bed and
> • the operating parameters of pressure, temperature and space velocity are selected in such a way that an $N_2O$ concentration of < 200 ppmv results.

**2.** The process as claimed in claim 1, wherein the targeted setting of the $N_2O$ removal in the catalyst bed arranged in the process gas is achieved by variation of the layer thickness or the layer height of the catalyst bed and/or selection of the catalyst material and/or selection of the geometry of the catalyst material.

**3.** The process as claimed in either claim 1 or 2, wherein the catalyst bed arranged in the process gas contains a catalyst suitable for the decomposition of $N_2O$, preferably a catalyst containing transition metal oxides and/or transition metal-containing mixed oxides, preferably mixed oxides having a perovskite structure, a perovskite-like structure or a spinel structure, and/or noble metals as active component.

**4.** The process as claimed in any of the preceding claims, wherein the catalyst material of the catalyst bed arranged in the process gas contains cobalt-containing oxides or mixed oxides as active components and is, in particular, a catalyst material which comprises a porous support composed of polycrystalline or vitreous inorganic material, a cerium oxide functional layer applied thereto and a layer of oxidic cobalt-containing material applied thereto.

**5.** The process as claimed in any of the preceding claims, wherein the catalyst material of the catalyst bed arranged in the process gas is configured as a shaped body which has the geometry of a cylinder, hollow cylinder, multi-hole cylinder, perforated and unperforated trilobes or polylobes or honeycomb structures, where the catalyst material of the catalyst bed arranged in the process gas is preferably configured as a shaped body whose equivalent diameter has a lower limit of > 1.5 mm, preferably > 3 mm and in particular > 5 mm, and has an upper limit of < 20 mm, preferably < 15 mm and in particular < 10 mm.

**6.** The process as claimed in any of the preceding claims, wherein the pressure drop over the catalyst material of the catalyst bed arranged in the process gas is < 30 mbar, preferably < 25 mbar, particularly preferably < 20 mbar, very particularly preferably < 15 mbar and in particular < 10 mbar, where, in particular, the bed height of the catalyst material of the catalyst bed arranged in the process gas is 3-30 cm, preferably 5-20 cm and particularly preferably 10-20 cm.

**7.** The process as claimed in any of the preceding claims, wherein the $N_2O$ removal in the catalyst bed in the process gas is 40-90%, preferably 45-80%, particularly preferably 50-70%, based on the amount of $N_2O$ initially present.

**8.** The process as claimed in any of the preceding claims, wherein the space velocity at which the tailgas is passed over the catalyst material of the catalyst bed arranged in the tailgas is from 200 to 200 000 $h^{-1}$, preferably from 5 000 to 10 000 $h^{-1}$ and particularly preferably from 5 000 to 50 000 $h^{-1}$, the pressure in the tailgas before entry into the catalyst material of the catalyst bed arranged in the tailgas is from 1 to 50 bar, preferably at least 2 bar, in particular at least 3 bar, very particularly preferably from 4 to 25 bar, and the temperature in the tailgas before entry into the catalyst material of the catalyst bed arranged in the tailgas is from 300ºC to 600ºC and preferably from 330ºC to 520ºC.

9. The process as claimed in any of the preceding claims, wherein the operating parameters pressure, temperature and space velocity in/over the catalyst bed arranged in the tailgas are set and/or hydrocarbons are added as reducing agent for $N_2O$ in this catalyst bed in such a way that the decrease in the content of $N_2O$ in this catalyst bed is at least 50%, preferably at least 70%, particularly preferably at least 80% and very particularly preferably from 90 to 100%, based on the content of $N_2O$ at the entry into this catalyst bed.

10. The process as claimed in any of the preceding claims, wherein an amount of from 0.9 to 1.3 mol of $NH_3$ per mol of $NO_x$ to be reduced and in particular from 1.0 to 1.2 mol of $NH_3$ per mol of NOx to be reduced is added to the tailgas before entry into the catalyst material of the catalyst bed arranged in the tailgas.

11. The process as claimed in any of claims 1 to 10, wherein hydrocarbons are mixed into the tailgas before entry into the catalyst material of the catalyst bed arranged in the tailgas, where an amount of 0.2-1 mol of hydrocarbon/1 mol of $N_2O$ to be reduced, preferably 0.2-0.7 mol of hydrocarbon/1 mol of $N_2O$ to be reduced and in particular 0.2-0.7 mol of hydrocarbons/1 mol of $N_2O$ to be reduced are added and, based on the $NO_x$ entry concentration, 1-2 mol of $NH_3$/mol of $NO_x$, preferably 1.2-1.8 mol of $NH_3$/mol of $NO_x$ and in particular 1.2-1.7 mol of $NH_3$/mol of $NO_x$, are added.

12. The process as claimed in any of the preceding claims, wherein the catalyst bed for $NO_x$ reduction and effecting a further decrease in the amount of $N_2O$ arranged in the tailgas is divided into a plurality of reaction zones or physically separate reaction stages and gradated introduction of $NH_3$ into the individual reaction zones or into the physically separate reaction stages of the catalyst bed arranged in the tailgas is preferably carried out.

13. The process as claimed in any of the preceding claims, wherein the iron-loaded zeolite catalyst of the catalyst bed arranged in the tailgas contains, based on the mass of zeolite, up to 25% of iron, preferably from 0.1 to 10% of iron.

14. The process as claimed in any of the preceding claims, wherein the iron-loaded zeolite catalyst of the catalyst bed arranged in the tailgas contains > 50% by weight and preferably > 70% by weight of an iron-loaded zeolite or a plurality of iron-loaded zeolites.

15. The process as claimed in any of the preceding claims, wherein the iron-loaded zeolite catalyst of the catalyst bed arranged in the tailgas is a zeolite of the MFI, BEA, FER, MOR, FAU and/or MEL type and is very particularly preferably an iron-loaded zeolite of the MFI and/or BEA and/or FER type.

16. The process as claimed in any of the preceding claims, wherein the iron-loaded zeolite catalyst of the catalyst bed arranged in the tailgas comprises a zeolite whose lattice aluminum has been completely or partly isomorphously replaced by one or more elements, where the elements are selected from the group consisting of B, Be, Ga, Fe, Cr, V, As, Sb and Bi, or comprises a zeolite whose lattice silicon has been completely or partly replaced by one or more elements selected from the group consisting of Ge, Ti, Zr and Hf and/or the iron-loaded zeolite catalyst of the catalyst bed arranged in the tailgas comprises a zeolite which has been hydrothermally pretreated with steam, where the zeolite which has been thermally pretreated with steam preferably has a ratio of extra-lattice aluminum to lattice aluminum of at least 1:2, preferably from 1:2 to 20:1.

17. The process as claimed in any of the preceding claims, wherein the gas flows axially, laterally or radially through the catalyst bed arranged in the tailgas.

18. The process as claimed in any of the preceding claims, wherein one or more further stages for $N_2O$ and/or $NO_x$ removal are arranged between the catalyst bed for $N_2O$ decomposition arranged in the process gas and the catalyst bed for $NO_x$ reduction and effecting a further decrease in the amount of $N_2O$ arranged in the tailgas.

19. A nitric acid plant in which a catalytic removal of the $N_2O$ formed in the catalytic $NH_3$ oxidation is carried out in the process gas and a further reduction of the $N_2O$ content and a reduction of the $NO_x$ content is carried out in the tailgas downstream of the absorption tower, which comprises at least the following elements:

A) reactor for the catalytic oxidation of $NH_3$ by means of oxygen to produce an $NO_x$-containing process gas,
B) absorption tower for reacting the $NO_x$ formed from the process gas with an absorption medium, preferably water, leaving a tailgas containing $NO_x$ and $N_2O$,

C) at least one first catalyst bed for $N_2O$ decomposition through which the process gas flows and which is arranged downstream of the catalytic $NH_3$ oxidation and upstream of the absorption tower in the flow direction,

D) at least one second catalyst bed for $NO_x$ reduction and effecting a further decrease in the $N_2O$ content, through which the tailgas flows and which is arranged downstream of the absorption tower in the flow direction, and

E) at least one device for feeding gaseous reducing agent into the tailgas, which is arranged downstream of the absorption tower and upstream of the second catalyst bed in the flow direction, where

F) the first catalyst bed contains a catalyst suitable for the decomposition of $N_2O$, preferably a catalyst which contains transition metal oxides and/or transition metal-containing mixed oxides, preferably mixed oxides having a perovskite structure, a perovskite-like structure or a spinel structure, and/or noble metals as active component and

G) the second catalyst bed contains a catalyst containing at least one iron-loaded zeolite.

20. The nitric acid plant as claimed in claim 19, wherein the catalyst material of the first catalyst bed contains cobalt-containing oxides or mixed oxides as active components and, in particular, is a catalyst material which comprises a porous support composed of polycrystalline or vitreous inorganic material, a cerium oxide functional layer applied thereto and a layer of oxidic cobalt-containing material applied thereto.

21. The nitric acid plant as claimed in either claim 19 or 20, wherein the bed height of the catalyst material of the first catalyst bed is 3-30 cm, preferably 5-20 cm and particularly preferably 10-20 cm.

22. The nitric acid plant as claimed in any of claims 19 to 21, wherein the iron-loaded zeolite catalyst in the second catalyst bed is a zeolite of the MFI, BEA, FER, MOR, FAU and/or MEL type and is very particularly preferably an iron-loaded zeolite of the MFI and/or BEA and/or FER type.

## Revendications

1. Procédé pour la préparation d'acide nitrique par oxydation catalytique de $NH_3$ avec de l'oxygène et transformation consécutive du $NO_x$ formé avec un absorbant dans une tour d'absorption, comprenant un lit catalytique pour la décomposition de $N_2O$, qui est disposé dans le gaz de procédé, dans le sens d'écoulement, en aval de l'oxydation catalytique de $NH_3$ et en amont de la tour d'absorption, et un lit catalytique pour la réduction de $NO_x$ et une nouvelle diminution de $N_2O$ qui est disposé dans le gaz résiduel, dans le sens d'écoulement, en aval de la tour d'absorption,

   - la décomposition de $N_2O$ dans le lit catalytique disposé dans le gaz de procédé et destiné à la décomposition de $N_2O$ étant au maximum telle que la teneur en $N_2O$ avant l'entrée du gaz résiduel dans le lit catalytique pour la réduction de $NO_x$ est > 100 ppm en volume et qu'on obtient un rapport molaire $N_2O/NO_x$ > 0,25, et
   - le lit catalytique disposé dans le gaz résiduel destiné à la réduction de $NO_x$ et une nouvelle diminution de $N_2O$ contenant au moins un catalyseur zéolithique chargé de fer, et
   - une quantité de $NH_3$ étant ajoutée au gaz résiduel avant l'entrée dans le lit catalytique de telle sorte qu'à la sortie du lit catalytique, on obtient une concentration en $NO_x$ < 40 ppm en volume, et
   - les paramètres de fonctionnement pression, température et vitesse spatiale étant choisis de manière telle qu'on obtient une concentration en $N_2O$ < 200 ppm en volume.

2. Procédé selon la revendication 1, **caractérisé en ce que** le réglage ciblé de la dégradation de $N_2O$ dans le lit catalytique disposé dans le gaz de procédé est atteint par des variations de l'épaisseur/hauteur de couche du lit catalytique et/ou du choix du matériau catalytique et/ou du choix de la géométrie du matériau catalytique.

3. Procédé selon l'une quelconque des revendications 1 ou 2, **caractérisé en ce que** le lit catalytique disposé dans le gaz de procédé contient un catalyseur approprié pour la décomposition de $N_2O$, de préférence un catalyseur qui contient, comme composant actif, des oxydes de métal de transition et/ou des oxydes mixtes contenant un métal de transition, de préférence des oxydes mixtes présentant une structure de pérovskite, une structure analogue à la pérovskite ou une structure de spinelle, et/ou des métaux nobles.

4. Procédé selon l'une quelconque des revendications précédentes, **caractérisé en ce que** le matériau catalytique du lit catalytique disposé dans le gaz de procédé contient des oxydes ou des oxydes mixtes contenant du cobalt comme composants actifs et est en particulier un matériau catalytique qui comprend un support poreux en un matériau inorganique polycristallin ou vitreux, une couche fonctionnelle d'oxyde de cérium disposée sur celui-ci et une couche de matériau oxyde contenant du cobalt disposée sur celle-ci.

5. Procédé selon l'une quelconque des revendications précédentes, **caractérisé en ce que** le matériau catalytique du lit catalytique disposé dans le gaz de procédé est réalisé sous forme de corps façonné, qui présente la géométrie d'un cylindre, d'un cylindre creux, d'un cylindre à plusieurs trous, d'un trilobe ou d'un polylobe troué ou non troué ou des structures en nid d'abeille, le matériau catalytique du lit catalytique disposé dans le gaz de procédé étant de préférence réalisé sous forme de corps façonné, dont le diamètre équivalent présente une limite inférieure > à 1,5 mm, de préférence > 3 mm et en particulier > 5 mm, et une limite supérieure < 20 mm, de préférence < 15 mm et en particulier < 10 mm.

6. Procédé selon l'une quelconque des revendications précédentes, **caractérisé en ce que** la perte de charge sur le matériau catalytique du lit catalytique disposé dans le gaz de procédé est < 30 mbars, de préférence < 25 mbars, de manière particulièrement préférée < 20 mbars, de manière tout particulièrement préférée < 15 mbars et en particulier < 10 mbars, la hauteur du matériau catalytique en vrac du lit catalytique disposé dans le gaz de procédé étant de 3-30 cm, de préférence de 5-20 cm et de manière particulièrement préférée de 10-20 cm.

7. Procédé selon l'une quelconque des revendications précédentes, **caractérisé en ce que** la dégradation du $N_2O$ dans le lit catalytique du gaz de procédé est de 40-90%, de préférence de 45-80%, de manière particulièrement préférée de 50-70%, par rapport à la quantité de $N_2O$ initialement présente.

8. Procédé selon l'une quelconque des revendications précédentes, **caractérisé en ce que** la vitesse spatiale à laquelle le gaz résiduel est guidé sur le matériau catalytique du lit catalytique disposé dans le gaz résiduel est de 200 à 200 000 $h^{-1}$, de préférence de 5000 à 10 000 $h^{-1}$, et de manière particulièrement préférée de 5000 à 50 000 $h^{-1}$, **en ce que** la pression dans le gaz résiduel avant l'entrée dans le matériau catalytique du lit catalytique disposé dans le gaz résiduel est de 1 à 50 bars, de préférence d'au moins 2 bars, en particulier d'au moins 3 bars, de manière tout particulièrement préférée de 4 à 25 bars et **en ce que** la température dans le gaz résiduel avant l'entrée dans le matériau catalytique du lit catalytique disposé dans le gaz résiduel est de 300°C à 600°C, et de préférence de 330°C à 520°C.

9. Procédé selon l'une quelconque des revendications précédentes, **caractérisé en ce que** les paramètres de fonctionnement pression, température et vitesse spatiale du lit catalytique disposé dans le gaz résiduel sont réglés et/ou **en ce que** des hydrocarbures sont introduits comme agent de réduction pour le $N_2O$ dans ce lit catalytique de manière telle que la diminution de la teneur en $N_2O$ dans ce lit catalytique est d'au moins 50%, de préférence d'au moins 70%, de manière particulièrement préférée d'au moins 80% et de manière tout particulièrement préférée de 90 à 100%, par rapport à la teneur en $N_2O$ à l'entrée de ce lit catalytique.

10. Procédé selon l'une quelconque des revendications précédentes, **caractérisé en ce qu'**on ajoute au gaz résiduel, avant l'entrée dans le matériau catalytique du lit catalytique disposé dans le gaz résiduel, une quantité de 0,9 à 1,3 mole de $NH_3$ par mole de $NO_x$ à réduire et en particulier de 1,0 à 1,2 mole de $NH_3$ par mole de $NO_x$ à réduire.

11. Procédé selon l'une quelconque des revendications 1 à 10, **caractérisé en ce qu'**on mélange au gaz résiduel, avant l'entrée dans le matériau catalytique du lit catalytique disposé dans le gaz résiduel, des hydrocarbures, en ajoutant une quantité de 0,2-1 mole d'hydrocarbure/1 mole de $N_2O$ à réduire, de préférence de 0,2-0,7 mole d'hydrocarbure/1 mole de $N_2O$ à réduire et en particulier de 0,2-0,7 mole d'hydrocarbures/1 mole de $N_2O$ à réduire et en ajoutant en outre, par rapport à la concentration initiale en $NO_x$, 1-2 moles de $NH_3$/mole $NO_x$, de préférence 1,2-1,8 mole de $NH_3$/mole de $NO_x$, et en particulier de 1,2-1,7 mole de $NH_3$/mole de $NO_x$.

12. Procédé selon l'une quelconque des revendications précédentes, **caractérisé en ce que** le lit catalytique disposé dans le gaz résiduel destiné à la réduction de $NO_x$ et à une nouvelle diminution de $N_2O$ est divisé en plusieurs zones de réaction ou étages de réaction séparés dans l'espace et **en ce qu'**on réalise de préférence une injection étagée de $NH_3$ dans les différentes zones de réaction ou dans les différents étages des réactions séparés dans l'espace du lit catalytique disposé dans le gaz résiduel.

13. Procédé selon l'une quelconque des revendications précédentes, **caractérisé en ce que** le catalyseur zéolithique chargé de fer du lit catalytique disposé dans le gaz résiduel contient, par rapport à la masse de zéolithe, jusqu'à 25% de fer, de préférence 0,1 à 10% de fer.

14. Procédé selon l'une quelconque des revendications précédentes, **caractérisé en ce que** le catalyseur zéolithique chargé de fer du lit catalytique disposé dans le gaz résiduel contient > 50% en poids et de préférence > 70% en poids d'une zéolithe chargée de fer ou de plusieurs zéolithes chargées de fer.

15. Procédé selon l'une quelconque des revendications précédentes, **caractérisé en ce que** le catalyseur zéolithique chargé de fer du lit catalytique disposé dans le gaz résiduel est une zéolithe de type MFI, BEA, FER, MOR, FAU et/ou MEL et de manière tout particulièrement préférée une zéolithe chargée de fer du type MFI et/ou BEA et/ou FER.

16. Procédé selon l'une quelconque des revendications précédentes, **caractérisé en ce que** le catalyseur zéolithique chargé de fer du lit catalytique disposé dans le gaz résiduel comprend une zéolithe dont l'aluminium de réseau est totalement ou partiellement substitué de manière isomorphe par un ou plusieurs éléments, les éléments étant choisis dans le groupe comprenant B, Be, Ga, Fe, Cr, V, As, Sb et Bi ou comprend une zéolithe dont le silicium de réseau est remplacé totalement ou partiellement par un ou plusieurs éléments choisis dans le groupe Ge, Ti, Zr et Hf et/ou **en ce que** le catalyseur zéolithique chargé de fer du lit catalytique disposé dans le gaz résiduel comprend une zéolithe qui est prétraitée de manière hydrothermique par de la vapeur d'eau, la zéolithe prétraitée de manière hydrothermique par de la vapeur d'eau présentant de préférence un rapport d'aluminium hors réseau à aluminium de réseau d'au moins 1:2, de préférence de 1:2 à 20:1.

17. Procédé selon l'une quelconque des revendications précédentes, **caractérisé en ce que** le lit catalytique disposé dans le gaz résiduel est traversé axialement, latéralement ou radialement.

18. Procédé selon l'une quelconque des revendications précédentes, **caractérisé en ce qu'**on dispose, entre le lit catalytique disposé dans le gaz de procédé destiné à la décomposition de $N_2O$ et le lit catalytique disposé dans le gaz résiduel destiné à la réduction de $NO_x$ et à une nouvelle diminution de $N_2O$, un ou plusieurs autres étages pour la dégradation de $N_2O$ et/ou de $NO_x$.

19. Installation d'acide nitrique, dans laquelle on réalise une élimination catalytique du $N_2O$ formé lors de l'oxydation catalytique de $NH_3$ dans le gaz de procédé ainsi qu'une nouvelle diminution de la teneur en $N_2O$ et une réduction de la teneur en $NO_x$ dans le gaz résiduel en aval de la tour d'absorption, **caractérisée par** au moins les éléments suivants :

   A) un réacteur pour l'oxydation catalytique de $NH_3$ avec de l'oxygène pour la production d'un gaz de procédé contenant $NO_x$,
   B) une tour d'absorption pour transformer le $NO_x$ formé du gaz de procédé avec un absorbant, de préférence de l'eau, un gaz résiduel contenant du $NO_x$ et du $N_2O$ restant,
   C) au moins un premier lit catalytique pour la décomposition de $N_2O$, qui est traversé par le gaz de procédé et qui est disposé, dans le sens d'écoulement, en aval de l'oxydation catalytique de $NH_3$ et en amont de la tour d'absorption,
   D) au moins un deuxième lit catalytique pour la réduction de $NO_x$ et une nouvelle diminution de $N_2O$, qui est traversé par le gaz résiduel et qui est disposé, dans le sens d'écoulement, en aval de la tour d'absorption, et
   E) au moins un dispositif pour l'injection d'agent de réduction gazeux dans le gaz résiduel, qui est disposé, dans le sens d'écoulement, en aval de la tour d'absorption et en amont du deuxième lit catalytique,
   F) le premier lit catalytique contenant un catalyseur approprié pour la décomposition de $N_2O$, de préférence un catalyseur qui contient, comme composant actif, des oxydes de métal de transition et/ou des oxydes mixtes contenant un métal de transition, de préférence des oxydes mixtes présentant une structure de pérovskite, une structure analogue à la pérovskite ou une structure de spinelle et/ou des métaux nobles, et
   G) le deuxième lit catalytique contenant un catalyseur qui contient au moins une zéolithe chargée de fer.

20. Installation d'acide nitrique selon la revendication 19, **caractérisée en ce que** le matériau catalytique du premier lit catalytique contient des oxydes ou des oxydes mixtes comme composants actifs et est en particulier un matériau catalytique qui comprend un support poreux en un matériau inorganique polycristallin ou vitreux, une couche fonctionnelle d'oxyde de cérium disposée sur celui-ci et une couche de matériau oxyde contenant du cobalt disposée sur celle-ci.

21. Installation d'acide nitrique selon l'une quelconque des revendications 19 à 20, **caractérisée en ce que** la hauteur du matériau catalytique en vrac du premier lit catalytique est de 3-30 cm, de préférence de 5-20 cm et de manière particulièrement préférée de 10-20 cm.

22. Installation d'acide nitrique selon l'une quelconque des revendications 19 à 21, **caractérisée en ce que** le catalyseur zéolithique chargé de fer dans le deuxième lit catalytique est une zéolithe de type MFI, BEA, FER, MOR, FAU et/ou MEL et de manière tout particulièrement préférée une zéolithe chargée de fer du type MFI et/ou BEA et/ou FER.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10112444 A1
- DE 10215605 A
- WO 0151415 A1
- WO 0151182 A1
- EP 1918016 A1
- DE 102007038711 A1
- EP 2184105 A
- EP 1301271 A
- DE 19848595
- EP 0955080 A

**In der Beschreibung aufgeführte Nicht-Patentliteratur**

- Ullmanns Encyclopedia of Industrial Chemistry. VCH, 1991, vol. A 17
- Anorganische Grundstoffe, Zwischenprodukte, Chemische Technik. **WINNACKER-KÜCHLER.** Chemische Technik, Prozesse und Produkte. Wiley-VCH, 2005, vol. 3
- **J. PEREZ-RAMIREZ et al.** Formation and control of N2O in nitric acid production - Where do we stand today?. *Appl. Catal. B Environmental,* 2003, vol. 44 (2), 117-151
- **M. SCHWEFER ; R. MAURER ; M. GROVES.** Reduction of Nitrous Oxide Emissions from Nitric Acid Plants. *Nitrogen 2000 International Conference, Wien, Österreich,* Marz 2000
- Integrated Pollution Prevention and Control Reference Document on Best Available Techniques for the Manufacture of Large Volume Inorganic Chemicals - Ammonia, Acids and Fertilisers. *European Commission,* August 2007
- **G. ERTL ; H. KNÖZINGER ; J. WEITKAMP.** Handbook of Heterogeneous Catalysis. VCH, 1997, vol. 4, 1633-1668
- **J. PÉREZ-RAMÍREZ et al.** *Catalysis Today,* 2002, vol. 76, 55-74
- **GROVES ; RIECK.** *Remarks and Comments on Nitric Acid Production Project Protocol - Public Draft Version 1.0,* Oktober 2009, http://www.climateaction-reserve-.org/wpcontent/up-loads/2009/06/NAP_Public_Comment_-_Uhde_GmbH.pdf
- **N. GUNASEKARAN et al.** *Catal. Lett.,* 1995, vol. 34 (3,4), 373-382
- **TUREK et al.** *Appl. Catal.,* 1999, vol. 184, 249-256
- Atlas of Zeolite Structure Types. Elsevier, 1996
- **M. RAUSCHER ; K. KESORE ; R. MÖNNIG ; W. SCHWIEGER ; A. TIßLER ; T. TUREK.** Preparation of highly active Fe-ZSM-5 catalyst through solid state ion exchange for the catalytic decomposition of N2O. *Appl. Catal.,* 1999, vol. 184, 249-256